# EUROPÄISCHE PATENTSCHRIFT

(11) **EP 1 763 545 B1**
(45) Veröffentlichungstag und Bekanntmachung des Hinweises auf die Patenterteilung: **03.06.2009**
(21) Anmeldenummer: 05753582.5
(22) Anmeldetag: 22.06.2005
(51) Int. Cl.: C08F 220/00, D06M 15/00

(54) **COPOLYMERISATE UND IHRE VERWENDUNG ZUR BEHANDLUNG VON FLEXIBLEN SUBSTRATEN**
COPOLYMERS AND USE THEREOF FOR THE TREATMENT OF FLEXIBLE SUBSTRATES
COPOLYMERES ET LEUR UTILISATION POUR TRAITER DES SUBSTRATS SOUPLES

(30) Priorität: 28.06.2004 DE 102004031299
(43) Veröffentlichungstag der Anmeldung: 21.03.2007
(73) Patentinhaber: BASF SE, 67056 Ludwigshafen (DE)
(72) Erfinder: ADAMS, Stefan, 67065 Ludwigshafen (DE); HÖHNE, Wolfgang, W., Sao Leopoldo, RS (BR); GIUNCHETTI, Celso, E., Lorena, SP (BR); ARANDT, Thomas, Dois Irmaos, RS (BR)
(86) Internationale Anmeldenummer: PCT/EP2005/006720
(87) Internationale Veröffentlichungsnummer: WO 2006/000385

(56) Entgegenhaltungen:
- EP-A- 0 279 134
- EP-A- 0 285 898
- US-A- 5 143 971

## Beschreibung

Die vorliegende Erfindung betrifft Copolymerisate, hergestellt durch Copolymerisation von
(a) 1 bis 10 Gew.-% mindestens einer ethylenisch ungesättigten C₄-C₁₀-Dicarbonsäure,
(b) 1 bis 10 Gew.-% mindestens einer ethylenisch ungesättigten C₃-C₁₀-Monocarbonsäure,
   wobei die Summe aus (a) und (b) im Bereich von 3,1 Gew.-% bis 15 Gew.-% liegt,
(c) 65 bis 95 Gew.-% mindestens einer Verbindung der allgemeinen Formel I 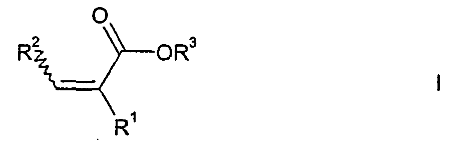
(d) 0 bis 3,5 Gew.-% (Meth)acrylamid,
(e) 0 bis 3 Gew.-% (Meth)acryinitril,
(f) 0 bis 20 Gew.-% mindestens einer vinylaromatischen Verbindung der allgemeinen Formel II 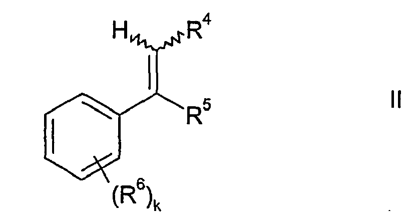
wobei die Variablen wie folgt definiert sind:
- R¹, R²: gleich oder verschieden und gewählt aus Wasserstoff und C₁-C₁₀-Alkyl,
- R³: gewählt aus C₁-C₂₀-Alkyl,
- R⁴, R⁵, R⁶: gleich oder verschieden und gewählt aus Wasserstoff und C₁-C₁₀-Alkyl,
- k: eine ganze Zahl im Bereich von 0 bis 3,
wobei die Copolymerisate vollständig oder partiell mit Alkali oder Ammonium neutralisiert sein können
und wobei Angaben in Gew.-% jeweils auf das gesamte Copolymerisat bezogen sind.

Weiterhin betrifft die vorliegende Erfindung wässrige Dispersionen der erfindungsgemäßen Copolymerisate. Weiterhin betrifft die vorliegende Erfindung die Verwendung der erfindungsgemäßen wässrigen Dispersionen zur Beschichtung von flexiblen Substraten, insbesondere von Leder und Lederimitaten, und ein Verfahren zur Beschichtung von flexiblen Substraten, insbesondere von Leder und Lederimitaten, unter Verwendung von erfindungsgemäßen wässrigen Dispersionen. Weiterhin betrifft die vorliegende Erfindung beschichtete flexible Substrate und die Verwendung von erfindungsgemäß beschichteten flexiblen Substrate.

Copolymerisate von Acrylaten finden zahlreiche Anwendungen, insbesondere als Bindemittel zum Beschichten von unterschiedlichsten Substraten. Bindemittel beeinflussen die mechanischen Eigenschaften von beschichteten Substraten entscheidend. Je nachdem, wie man Bindemittel herstellt, können beschichtete flexible Substrate eine eher hart oder weich anzufühlende Oberfläche aufweisen.

Wenn man Leder oder Lederimitate beschichtet, beispielsweise beim sogenannten Finishen, prägt man in vielen Fällen, insbesondere dann, wenn man den natürlichen Narben nicht hat verwenden können, einen künstlichen Narben auf das gefinishte Leder. Dabei werden an Bindemittel für flexible Substrate wie Leder oder Lederimitate besonders anspruchsvolle Anforderungen gestellt. Der Prägevorgang wird durch die Eigenschaften des Finish entscheidend beeinflusst. Gewünscht wird, dass man möglichst schnell bei Temperaturen von über 90°C oder noch besser über 100°C prägen kann, ohne dass die Prägewerkzeuge verkleben und ohne dass der Finish Schnitte aufweist. Dabei kommt es in erheblichem Maße auf das oder die Bindemittel an. Bisher bekannte Bindemittel sind noch zu verbessern, was die Klebrigkeit bei Temperaturen von 100°C oder mehr betrifft.

Aus DE 26 17 243 A ist bekannt, dass sich Itaconsäure-Acrylat-Copolymere mit im Bereich von 0,5 bis 3 % Säure (Itaconsäure und gegebenenfalls anderen ungesättigten Säuren) herstellen lassen. Derartige Copolymere sind geeignet, um zellenförmige Schäume herzustellen.

Aus WO 88/02759 ist bekannt, dass man ungesättigte Dicarbonsäuren wie beispielsweise Itaconsäure mit Acrylaten wie beispielsweise Butylacrylat und gegebenenfalls zur Vernetzung befähigten Comonomeren wie Methylolacrylamid copolymerisieren kann. Man arbeitet vorzugsweise nach einem Mehrstufenverfahren (Seite 3, 2. Absatz), indem man von Itaconsäure verschiedene Comonomere vorlegt und die Itaconsäure erst während der Polymerisation zusetzt. Die mechanischen Eigenschaften sind jedoch bei der Beschichtung von zahlreichen flexiblen Substraten noch nicht ausreichend. Insbesondere erweisen sich die gemäß WO 88/02759 hergestellten Copolymerisate in zahlreichen Anwendungen als zu klebrig. Außerdem offenbart WO 88/02759, dass Methylolacrylamid ein besonders geeignetes Comonomer ist, das zur Vernetzung von Beschichtungen nach dem in WO 88/02759 demonstrierten Verfahren geeignet ist. Die Vernetzung beruht in jenem Falle auf der Abspaltung von Formaldehyd und der Weiterreaktion des in situ erzeugten Formaldehyds. Formaldehyd wird jedoch in zahlreichen vernetzten Substraten nicht mehr akzeptiert.

Aus US 5,143,971 ist bekannt, dass man Itaconsäure mit einem oder mehreren (Meth)-acrylsäurealkylester copolymerisieren kann, indem man mindestens die Hälfte der einzupolymerisierenden Itaconsäure vorlegt und einen Zulauf, der im Wesentlichen (Meth)acrylsäurealkylester enthält, während der Polymerisation zusetzt. Man erhält Copolymerisate mit einer Glastemperatur im Bereich von -20 bis -60°C, die sich zu Filmen verarbeiten lassen. Die mechanischen Eigenschaften sind jedoch bei der Beschichtung von zahlreichen flexiblen Substraten noch nicht ausreichend.

Es bestand die Aufgabe, Copolymerisate bereit zu stellen, die sich zur Beschichtung von flexiblen Substraten eignen und die aus dem Stand der Technik bekannten Nachteile nicht aufweisen. Weiterhin bestand die Aufgabe, wässrige Dispersionen von Copolymerisaten bereit zu stellen. Weiterhin bestand die Aufgabe, ein Verfahren zur Herstellung von Copolymerisaten bereit zu stellen. Weiterhin bestand die Aufgabe, ein Verfahren zur Beschichtung von flexiblen Substraten bereit zu stellen. Schließlich bestand die Aufgabe, beschichtete flexible Substrate bereit zu stellen.

Demgemäß wurde eingangs definierte Copolymerisate gefunden. Erfindungsgemäße Copolymerisate erhält man durch Copolymerisation der folgenden Comonomere:
(a) 1 bis 10 Gew.-%, bevorzugt 2 bis 5 Gew.-% und besonders bevorzugt 2,5 bis 4 Gew.-% mindestens einer ethylenisch ungesättigten C₄-C₁₀-Dicarbonsäure, beispielsweise Maleinsäure, Fumarsäure, Metaconsäure, Citraconsäure, Itaconsäure, bevorzugt mindestens einer ethylenisch ungesättigten C₅-Dicarbonsäure, beispielsweise Metaconsäure, Citraconsäure, Itaconsäure;
(b) 1 bis 10 Gew.-%, bevorzugt 1,5 bis 5 Gew.-% und besonders bevorzugt 2,0 bis 4 Gew.-% mindestens einer ethylenisch ungesättigten C₃-C₁₀-Monocarbonsäure, insbesondere (Meth)acrylsäure.
   Dabei liegt die Summe aus (a) und (b) im Bereich von 3,1 Gew.-% bis 15 Gew.-%, bevorzugt im Bereich von 3,5 bis 10 und besonders bevorzugt im Bereich von 4 bis 8 Gew.-%.
(c) 65 bis 95 Gew.-%, bevorzugt 70 bis 93 Gew.-% mindestens einer Verbindung der allgemeinen Formel I 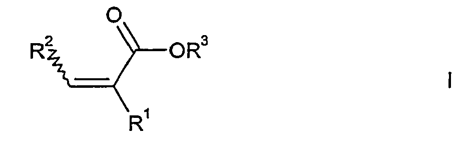 wobei die Variablen wie folgt definiert sind:
   - R¹, R²: gleich oder verschieden und gewählt aus C₁-C₁₀-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl; oder Wasserstoff,
   ganz besonders bevorzugt sind Wasserstoff und Methyl;
   - R³: gewählt aus C₁-C₂₀-Alkyl, beispielsweise n-Undecyl, n-Dodecyl, n-Tridecyl, n-Tetradecyl, n-Pentadecyl, n-Hexadecyl, n-Heptadecyl, n-Octadecyl, n-No-nadecyl, n-Eicosyl; bevorzugt C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt n-Butyl, Ethyl und 2-Ethylhexyl.
(d) 0 bis 3,5 Gew.-%, bevorzugt 1 bis 3 Gew.-% (Meth)acrylamid,
(e) 0 bis 3 Gew.-% (Meth)acrylnitril, bevorzugt bis 1 Gew.-%;
(f) 0 bis 20 Gew.-%, bevorzugt 5 bis 10 Gew.-% mindestens einer vinylaromatischen Verbindung der allgemeinen Formel II 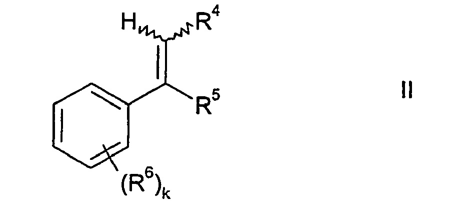
wobei die Variablen wie folgt definiert sind:
- R⁴, R⁵, R⁶: gleich oder verschieden und gewählt aus C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl; oder insbesondere Wasserstoff.
- k: ist eine ganze Zahl im Bereich von 0 bis 3, bevorzugt 1 und besonders bevorzugt Null.

Dabei sind Angaben in Gew.-% jeweils auf gesamtes erfindungsgemäßes Copolymerisat bezogen.

In einer bevorzugten Ausführungsform der vorliegenden Erfindung handelt es sich bei mindestens einer ethylenisch ungesättigten C₄-C₁₀-Dicarbonsäure um Itaconsäure.

Beispielhaft zu nennende Comonomere der allgemeinen Formel I sind Methyl(meth)-acrylat, n-Butyl(meth)acrylat, Ethyl(meth)acrylat, 2-Ethylhexyl(meth)acrylat oder Mischungen derselben.

Beispielhaft zu nennende vinylaromatische Verbindungen der Formel II sind beispielsweise α-Methylstyrol, para-Methylstyrol, α-n-Butylstyrol, para-n-Butylstyrol, 4-n-Decylstyrol und insbesondere Styrol.

In einer Ausführungsform der vorliegenden Erfindung liegt die Viskosität von mindestens einem erfindungsgemäßen Copolymerisat im Bereich von 20 bis 1000 mPa·s, bestimmt beispielsweise nach der Brookfield-Methode, beispielsweise mit einem Brookfield-Viskosimeter, Spindeln 2 bis 6.

In einer Ausführungsform der vorliegenden Erfindung liegt der mittlere Teilchendurchmesser (Zahlenmittel) von mindestens einem erfindungsgemäßen Copolymerisat im Bereich von 50 bis 150 nm, bevorzugt von 75 bis 100 nm.

Die Glastemperatur T_{g}, beispielsweise bestimmbar nach ASTM 3418/82, von erfindungsgemäßen Copolymerisaten liegt bei 15°C oder darunter. Bevorzugt liegt die Glastemperatur T_{g} von erfindungsgemäßen Copolymerisaten im Bereich von -60°C bis 15°C, besonders bevorzugt im Bereich von -40°C bis +10°C, ganz besonders bevorzugt im Bereich von -35°C bis +5°C.

Die erfindungsgemäßen Copolymerisate sind in aller Regel statistische Copolymerisate.

Erfindungsgemäße Copolymerisate können vollständig oder partiell mit Alkali oder Ammonium neutralisiert sein, wobei unter Alkali beispielsweise Li⁺, Rb⁺ oder Cs⁺ und insbesondere K⁺ und Na⁺ zu verstehen sind. Unter Ammonium sind nicht nur NH₄⁺, sondern auch substituierte Ammoniumionen wie beispielsweise Alkylammonium, Dialkylammonium, Trialkylammonium, Tetraalkylammonium, wobei Alkyl gleich oder verschieden sein können und gewählt aus
C₁-C₁₀-Alkyl, unsubstituiert oder ein- oder mehrfach substituiert mit beispielsweise Hydroxyl,
wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl,
2-Hydroxyethyl, 3-Hydroxyproyl, 4-Hydroxybutyl, 6-Hydroxyhexyl.

Ein weiterer Gegenstand der vorliegenden Erfindung ist ein Verfahren zur Herstellung erfindungsgemäßer Copolymerisate. Zur Durchführung des erfindungsgemäßen Verfahrens kann man so vorgehen, dass man
(a) 1 bis 10 Gew.-% mindestens einer ethylenisch ungesättigten C₄-C₁₀-Dicarbonsäure, bevorzugt mindestens einer ethylenisch ungesättigten C₅-Dicarbonsäure,
(b) 1 bis 10 Gew.-% mindestens einer ethylenisch ungesättigten C₃-C₁₀-Monocarbonsäure,
   wobei die Summe aus (a) und (b) im Bereich von 3,1 Gew.-% bis 15 Gew.-% liegt,
(c) 65 bis 95 Gew.-% mindestens einer Verbindung der allgemeinen Formel I 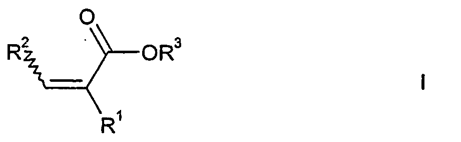
(d) 0 bis 3,5 Gew.-% (Meth)acrylamid,
(e) 0 bis 3 Gew.-% (Meth)acrylnitril,
(f) 0 bis 20 Gew.-% mindestens einer vinylaromatischen Verbindung der allgemeinen Formel II 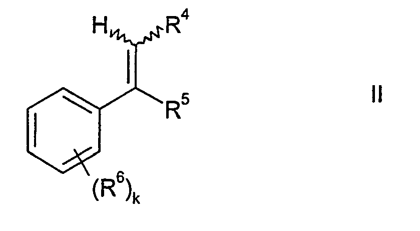
wobei die Variablen wie folgt definiert sind:
- R¹, R²: gleich oder verschieden und gewählt aus Wasserstoff und C₁-C₁₀-Alkyl,
- R³: gewählt aus C₁-C₂₀-Alkyl,
- R⁴, R⁵, R⁶: gleich oder verschieden und gewählt aus Wasserstoff und C₁-C₁₀-Alkyl,
- k: eine ganze Zahl im Bereich von 0 bis 3,
und wobei Angaben in Gew.-% jeweils auf die Gesamtmasse der Comonomeren bezogen sind,
durch Emulsionspolymerisation miteinander polymerisiert
und gegebenenfalls mit basischer Alkalimetallverbindung, Ammoniak oder Amin vollständig oder partiell neutralisiert.

Dabei wird im Folgenden auch dann von Emulsionspolymerisation gesprochen, wenn drei oder mehr Comonomere eingesetzt werden. Der Begriff Emulsionspolymerisation umfasst im Folgenden also auch Emulsionscopolymerisationen.

Man kann verschiedene Fahrweisen der Emulsionspolymerisation zur Herstellung von erfindungsgemäßem Copolymerisat wählen, beispielsweise einen Batch-Prozess (diskontinuierlich) oder semi- oder vollkontinuierliche Verfahren wie Zulaufverfahren.

Dabei kommen auch sogenannte Saatfahrweisen in Frage, wie sie beispielsweise in EP 0 810 831 beschrieben sind. Durch Saatfahrweise lassen sich besonders gut erfindungsgemäße Copolymerisate mit besonders gut reproduzierbarer Teilchendurchmesserverteilung erzeugen.

Üblicherweise polymerisiert man unter Verwendung mindestens eines Initiators. Mindestens ein Initiator kann ein Peroxid sein. Beispiele für geeignete Peroxide sind Alkalimetallperoxodisulfate wie z. B. Natriumperoxodisulfat, Ammoniumperoxodisulfat, Wasserstoffperoxid, organische Peroxide wie Diacetylperoxid, Di-tert.-butylperoxid, Diamylperoxid, Dioctanoylperoxid, Didecanoylperoxid, Dilauroylperoxid, Dibenzoylperoxid, Bis-(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, Di-tert.-butylperoxid, tert.-Butylhydroperoxid, Cumolhydroperoxid, tert.-Butylperoxi-2-ethylhexanoat und Diisopropylperoxidicarbamat. Geeignet sind auch Azoverbindungen wie beispielsweise Azobisisobutyronitril, Azobis(2-amidopropan)dihydrochlorid und 2,2'-Azobis(2-methylbutyronitril).

Redoxinitiatoren sind ebenfalls geeignet, beispielsweise aus Peroxiden und oxidierbarer Schwefelverbindung. Ganz besonders bevorzugt sind Systeme aus Acetonbisulfit und organischem Peroxid wie tert.-C₄H₉-OOH, Na₂S₂O₅, (Natriumdisulfit) und organischem Peroxid wie tert.-C₄H₉-OOH oder HO-CH₂SO₂Na und organischem Peroxid wie tert.-C₄H₉-OOH. Auch sind Systeme wie beispielsweise Ascorbinsäure/H₂O₂ besonders bevorzugt.

Als Polymerisationstemperatur kann man Temperaturen im Bereich von 20 bis 105°C, bevorzugt 50 bis 85°C wählen. Die gewählte Temperatur ist abhängig von der Zerfallscharakteristik des verwendeten Initiators bzw. der verwendeten Initiatoren.

Die Druckbedingungen sind im Allgemeinen unkritisch, geeignet sind beispielsweise Drücke im Bereich von Normaldruck bis 10 bar.

Man kann mindestens einen Emulgator einsetzen, der anionisch, kationisch oder nichtionisch sein kann.

Gebräuchliche nichtionische Emulgatoren sind z.B. ethoxylierte Mono-, Di- und Tri-Alkylphenole (Ethoxylierungsgrad: 3 bis 50, Alkylrest: C₄-C₁₂) sowie ethoxylierte Fettalkohole (Ethoxylierungsgrad: 3 bis 80; Alkylrest: C₈-C₃₆). Beispiele sind die Lutensol^{®}-Marken der BASF Aktiengesellschaft und die Triton^{®}-Marken der Union Carbide.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (Ethoxylierungsgrad: 4 bis 30, Alkylrest: C₁₂-C₁₈) und ethoxylierter Alkylphenole (Ethoxylierungsgrad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(*N,N,N*-Trimethylammonium)ethylparaffinsäureester, *N*-Cetylpyridiniumchlorid, *N*-Laurylpyridiniumsulfat sowie *N*-Cetyl-*N,N,N*-trimethylammoniumbromid, *N*-Dodecyl-*N,N,N*-tri-methylammoniumbromid, *N,N*-Distearyl-*N,N*-dimethylammoniumchlorid sowie das Gemini-Tensid *N,N*-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989**.**

Natürlich kann man der Reaktionsmischung weitere Zusatzstoffe beifügen, die in der Emulsionspolymerisation üblich sind, beispielsweise Glykole, Polyethylenglykole, Schutzkolloide und Puffer/pH-Wert-Regulatoren.

Als Zeitdauer für die Emulsionspolymerisation kann man beispielsweise eine Zeitdauer im Bereich von 30 Minuten bis 12 Stunden wählen, bevorzugt sind 2 bis 5 Stunden.

Im Anschluss an die eigentliche Copolymerisation kann man desodorieren, beispielsweise durch Zugabe von Initiator, der gleich oder verschieden von dem in der eigentlichen Copolymerisation eingesetzten Initiator ist.

In einer Ausführungsform der vorliegenden Erfindung verläuft die Copolymerisation im Wesentlichen vollständig. Die Zusammensetzung erfindungsgemäßer Copolymeren unterscheidet sich nicht messbar von der Zusammensetzung der Comonomeren.

In einer Ausführungsform der vorliegenden Erfindung übt man das erfindungsgemäße Verfahren nach Art eines Einstufenverfahrens aus. Dabei sollen unter Einstufenverfahren im Sinne der vorliegenden Erfindung beispielsweise diskontinuierliche (Batch)-Verfahren verstanden werden und Zulaufverfahren, bei denen ein Anteil der Comonomere vorgelegt werden kann und Anteile der Comonomeren während der Copolymerisation zugefügt werden (Zulauf), wobei die Zusammensetzung des Zulaufs betreffend die Comonomeren während der Copolymerisation im Wesentlichen konstant bleibt.

Durch das erfindungsgemäße Verfahren hergestellte erfindungsgemäße Copolymerisate fallen üblicherweise in Form wässriger Dispersionen an, die ebenfalls Gegenstand der vorliegenden Erfindung sind und aus denen sich die erfindungsgemäßen Copolymerisate durch an sich bekannte Methoden wie beispielsweise Verdampfen des Wassers isolieren lassen.

Erfindungsgemäße Dispersionen enthalten mindestens ein erfindungsgemäßes Copolymerisat.

In einer Ausführungsform der vorliegenden Erfindung ist der mittlere Durchmesser (Zahlenmittel) von Feststoffpartikeln in erfindungsgemäßen wässrigen Dispersionen im Bereich von 20 bis 500 nm, bevorzugt bis 200 nm, bestimmt beispielsweise durch quasielastische Lichtstreuung (QELS). Geeignete Messmethoden sind beispielsweise in ISO13321 beschrieben und gehen von stark mit Wasser verdünnten erfindungsgemäßen wässrigen Dispersionen mit einem Feststoffgehalt von 0,005 Gew.-% und weniger aus.

In einer Ausführungsform der vorliegenden Erfindung weisen erfindungsgemäße Dispersionen einen Feststoffgehalt im Bereich von 5 bis 60 Gew.-% auf, bevorzugt 20 bis 50 Gew.-%, besonders bevorzugt 25 bis 40 Gew.-%.

In einer speziellen Ausführungsform der vorliegenden Erfindung weisen erfindungsgemäße Dispersionen einen pH-Wert im Bereich von 2 bis 9 auf.

In einer speziellen Ausführungsform der vorliegenden Erfindung weisen erfindungsgemäße Dispersionen einen pH-Wert im Bereich von 2 bis 6, bevorzugt im Bereich von 3 bis 4 auf. Es handelt sich dabei vorzugsweise um erfindungsgemäße Dispersionen, die nicht neutralisiertes erfindungsgemäßes Copolymerisat enthalten.

In einer anderen speziellen Ausführungsform der vorliegenden Erfindung weisen erfindungsgemäße Dispersionen einen pH-Wert im Bereich von 6 bis 9, bevorzugt im Bereich von 6,5 bis 8 auf. Es handelt sich dabei vorzugsweise um erfindungsgemäße Dispersionen, die partiell oder vollständig neutralisiertes erfindungsgemäßes Copolymerisat enthalten.

Ein weiterer Gegenstand der vorliegenden Erfindung ist die Verwendung von erfindungsgemäßen wässrigen Dispersionen zur Beschichtung von flexiblen Substraten. Ein weiterer Gegenstand der vorliegenden Erfindung ist ein Verfahren zur Beschichtung von flexiblen Substraten unter Verwendung von erfindungsgemäßen wässrigen Dispersionen, im Folgenden auch erfindungsgemäßes Beschichtungsverfahren genannt, und ein weiterer Gegenstand der vorliegenden Erfindung sind beschichtete flexible Substrate, erhältlich durch ein erfindungsgemäßes Beschichtungsverfahren.

Flexible Substrate im Sinne der vorliegenden Erfindung sind beispielsweise Textil und insbesondere Leder und Lederimitate.

Unter Leder ist im Rahmen der vorliegenden Erfindung vorgegerbtes, gegerbtes und gegebenenfalls nachgegerbtes Leder oder entsprechend bearbeitetes synthetisches Austauschmaterial zu verstehen, was während mindestens eines Gerbschritts bereits mit mindestens einem Farbstoff behandelt worden sein kann. Leder im Rahmen der vorliegenden Erfindung kann bereits hydrophobiert bzw. gefettet sein.

Bei Lederimitaten handelt es sich beispielsweise um Fasergebilde wie beispielsweise wovens und non-wovens, die mit Hilfe von Bindemitteln gebunden sind. Beispielhaft seien Fasergebilde aus gegerbten Lederfasern, z. B. von Schleifabfällen und/oder Falzspänen genannt, wie sie bei der Lederherstellung anfallen.

Zur Durchführung des erfindungsgemäßen Beschichtungsverfahrens geht man vorteilhaft so vor, dass man flexible Substrate mit mindestens einer erfindungsgemäßen Dispersion kontaktiert und danach thermisch behandelt. Beispielsweise kann man Leder mit mindestens einer wässrigen Flotte behandeln, die mindestens eine erfindungsgemäße Dispersion enthält, und so behandeltes Leder in einem oder mehreren Durchlauftrockenkanälen bei Lufttemperaturen von 60 bis 150 °C, bevorzugt 80 bis 110°C, trocknen. Danach stapelt man die noch warmen, zugerichteten Leder aufeinander, üblicherweise Narben- auf Narben- und Fleisch- auf Fleischseite. Wenn man erfindungsgemäß mindestens eine erfindungsgemäße Dispersion eingesetzt hat, so beobachtet man, dass es trotz der hohen Gewichte der auflagernden Leder kaum zu Verklebungen der Zurichtseiten der unteren Lederstücke kommt.

In einer anderen Ausführungsform der vorliegenden Erfindung handelt es sich bei dem erfindungsgemäßen Beschichtungsverfahren um ein Verfahren zur Zurichtung von Leder. Ziel einer Zurichtung von Leder, auch Beschichtung von Leder genannt, ist es, Leder das gewünschte Aussehen, spezielle haptische Eigenschaften sowie Gebrauchsechtheiten zu geben wie z.B. Knickelastizität, Aminbeständigkeit, Nass- und Trockenreibechtheit und Wasserechtheit.

In einer Ausführungsform geht das erfindungsgemäße Verfahren zur Beschichtung von flexiblen Substraten aus von vorgegerbtem, gegerbtem und gegebenenfalls nachgegerbtem Leder, welches bereits nach an sich bekannter Weise hydrophobiert und gefärbt sein kann.

Bei dem erfindungsgemäßen Verfahren zur Zurichtung von Leder verwendet man in mindestens einem Schritt - Grundierung und Aufbringen mindestens einer Deckschicht - mindestens eine erfindungsgemäße wässrige Dispersion. Zur Durchführung des erfindungsgemäßen Verfahrens zur Beschichtung von flexiblen Substraten geht man also weiterhin aus von mindestens einem erfindungsgemäßen Copolymerisat, vorzugsweise in Form von mindestens einer wässrigen Dispersion, und vermischt es mit mindestens einem Filler.

Gegenstand der vorliegenden Erfindung ist weiterhin ein Lederfinish, enthaltend mindestens eine erfindungsgemäße wässrige Dispersion und einen Filler. Der Filler kann ein oder mehrere Proteine enthalten. Bevorzugt enthält erfindungsgemäßes Lederfinish Protein-freien Filler.

In einer Ausführungsform der vorliegenden Erfindung enthält erfindungsgemäßes Lederfinish:
im Bereich von 30 bis 80 Gew.-%, bevorzugt 50 bis 75 Gew.-% mindestens einer erfindungsgemäßen Dispersion,
im Bereich von 15 bis 40 Gew.-%, bevorzugt 20 bis 35 Gew.-% mindestens eines Fillers,
im Bereich von 0 bis 5 Gew.-%, bevorzugt 0,1 bis 3 Gew.-% mindestens eines Verdickers,
im Bereich von 0 bis 5 Gew.-%, bevorzugt 0,1 bis 1,5 Gew.-% Vernetzungsmittel
im Bereich von 0 bis 1 Gew.-%, bevorzugt 0,1 bis 0,3 Gew.-% mindestens eines Biozids,
wobei die Angaben in Gew.-% jeweils die Feststoffe betreffen und auf den Feststoffgehalt des erfindungsgemäßen Lederfinish bezogen sind.
Als Filler kann man Gemische einsetzen, die enthalten:
im Bereich von 20 bis 65 Gew.-% eine oder mehrerer anorganischen feste Verbindungen, z.B. amorphe Kieselsäure, Kaolin, Bentonit;
im Bereich von 25 bis 50 Gew.-% eines oder mehrerer organischen Öle und/oder Fette, z.B. Triolein, Lanolin, Klauenöl, Erdnussöl, Paraffin;
im Bereich von 0 bis 40 Gew.-% Protein, z.B. Casein; bevorzugt setzt man Protein-freie Filler ein;
im Bereich von 0 bis 15 Gew.-% ein oder mehrere oberflächenaktive Verbindungen, beispielsweise ein oder mehrere Tenside, z.B. organische Säuren, z.B. Ölsäure, Stearinsäure, bevorzugt als Ammoniumsalz, C₁₀-C₄₀-Alkanole, gegebenenfalls ein- bis 30-fach ethoxyliert,
im Bereich von 0 bis 7 Gew.-%, bevorzugt 0,1 bis 5 Gew.-% sonstige Hilfsmittel wie z.B. Biozide, die wie oben gewählt werden, anorganische und organische Basen,
und Wasser,
wobei Gew.-% jeweils auf die Trockenmasse des betreffenden Fillers bezogen ist.

Erfindungsgemäß eingesetzte Filler haben in einer Ausführungsform der vorliegenden Erfindung einen pH-Wert im Bereich von 8 bis 10,5.

Erfindungsgemäß eingesetzte Filler können beispielsweise einen Feststoffgehalt im Bereich von 20 bis 35 %, bevorzugt von 25 bis 27 % aufweisen.

Erfindungsgemäßes Lederfinish kann einen oder mehrere Verdicker enthalten. Beispielhaft seien vernetzbare Copolymere auf Basis von Acrylsäure und Acrylamid sowie Verdickungsmittel auf Basis von Polyurethan oder Polyvinylpyrrolidon oder Acrylat(co)polymerisaten genannt.

Natürlich können Appreturdispersionen weitere übliche Bestandteile enthalten, beispielsweise Schellack oder ein oder mehrere weitere Pigmente oder Nitrocellulose.

Als Verdicker kann man natürliche oder synthetische Verdicker einsetzen. Bevorzugt ist der Einsatz von synthetischen Verdickern, beispielsweise von im Allgemeinen flüssigen Wasser-in-Öl-Emulsionen von synthetischen (Co-)Polymeren in beispielsweise Weißöl, vorzugsweise mit etwa 40 Gew.-% (Co-)Polymer.

Bevorzugte Beispiele für Verdicker sind Copolymere mit 85 bis 95 Gew.-% Acrylsäure, 4 bis 14 Gew.-% Acrylamid und gegebenenfalls 0,01 bis etwa 1 Gew.-% eines (Meth)acrylamidderivats der Formel III 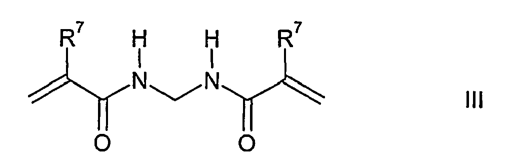 mit Molekulargewichten M_{w} im Bereich von 100.000 bis 200.000 g/mol, in denen R⁷ gewählt wird aus Methyl und vorzugsweise Wasserstoff.

Erfindungsgemäßes Lederfinish kann einen oder mehrere Vernetzer enthalten. Geeignete Vernetzer sind beispielsweise Magnesium, Calcium- und Zinkverbindungen.

Bevorzugte Magnesiumverbindungen sind beispielsweise Mg(OH)₂, basische Magnesiumcarbonate wie beispielsweise MgCO₃·Mg(OH)₂·H₂O und insbesondere MgCl₂·6 H₂O.

Bevorzugte Calciumverbindungen sind beispielsweise Ca(OH)₂ CaO·aq und CaO.

Bevorzugte Zinkverbindungen sind beispielsweise Zinkoxid, ZnO·aq und Zinktetraminkomplexsalze. Besonders bevorzugt sind [Zn(NH₃)₄]CO₃, [Zn(NH₃)₄](HCO₃)₂ und [Zn(NH₃)₄]SO₄.

Erfindungsgemäße Lederfinishs können mindestens ein oder Biozid enthalten, beispielsweise 1,2-Benzisothiazolin-3-on ("BIT"), kommerziell erhältlich als Proxel®-Marken der Fa. Avecia Lim. und dessen Alkalimetallsalze. Andere geeignete Biozide sind 2-Methyl-2H-isothiazol-3 ("MIT") und 5-Chlor-2-methyl-2H-isothiazol-3-on ("CIT"). Im Allgemeinen sind 10 bis 150 ppm Biozid ausreichend..

Erfindungsgemäßes Lederfinish kann einen Feststoffgehalt im Bereich von 10 bis 40 % aufweisen, bevorzugt 25 bis 35 %.

In einer Ausführungsform der vorliegenden Erfindung weist erfindungsgemäßes Lederfinish eine kinematische Viskosität im Bereich von 20 bis 40 s, bevorzugt im Bereich von 25 bis 35 s auf, bestimmt beispielsweise nach DIN 53211.

Man kann erfindungsgemäßes Lederfinish vor dem Kontaktieren mit flexiblem Substrat und insbesondere mit Leder mit mindestens einem Pigment beispielsweise als reines Pigment, vorzugsweise in Form von mindestens einer Pigmentpräparation vermischen, wobei Pigmente aus anorganischen und organischen Pigmenten gewählt sein können, beispielsweise Azopigmente, Anthrachinonpigmente, Azophosphinpigmente, Thioindigopigmente, Dioxazinpigmente, Naphthalintetracarbonsäurepigmente, Perylentetracarbonsäurepigmente, kupferhaltige oder kupferfreie Phthaloyaninoigmente, verlackte Farbstoffe wie beispielsweise Calcium-, Magnesium- oder Aluminiumlacke von Sulfonsäuregruppen- oder Carbonsäuregruppen-haltigen Farbstoffen, weiterhin Eisenoxide, Nickel-Chromverbindungen, Siliziumdioxide, Aluminiumoxide, Ultramarin, Spinelle und Titandioxide.

Pigmentpräparationen im Sinne der vorliegenden Erfindung können neben Pigment ein oder mehrere Dispergiermittel, Tenside, Biozide und Netzmittel enthalten und weiterhin Wasser. Pigmentpräparationen im Sinne der vorliegenden Erfindung können einen Feststoffgehalt im Bereich von 5 bis 60 Gew.-% aufweisen.

Wenn man erfindungsgemäßes Lederfinish mit Pigmentpräparation vermischt, so kann man die Mengenverhältnisse in weiten Bereichen wählen. Beispielsweise kann man die Mengenverhältnisse so wählen, dass die sich Feststoffgehalte von erfindungsgemäßer Lederfinish und Pigmentpräparation wie 20 : 1 bis 1 : 1 verhalten, bevorzugt von 15 : 1 bis 2 : 1.

Geeignete Pigmentpräparationen findet man beispielsweise in DE 41 42 240 A2 beschrieben.

Mischungen von erfindungsgemäßem Lederfinish und Pigment, bevorzugt von erfindungsgemäßem Lederfinish und Pigmentpräparation wird im Rahmen der vorliegenden Erfindung auch als erfindungsgemäßes Pigment-haltiges Lederfinish oder als erfindungsgemäßer Farbansatz bezeichnet.

Zur Durchführung des erfindungsgemäßen Beschichtungsverfahrens geht man vorteilhaft so vor, dass man Leder mit mindestens einem erfindungsgemäßen Lederfinish, bevorzugt mindestens einem erfindungsgemäßen Farbansatz kontaktiert und danach thermisch behandelt.

In einer bevorzugten Ausführungsform bringt man zur Durchführung des erfindungsgemäßen Beschichtungsverfahrens mindestens ein erfindungsgemäßes Lederfinish, bevorzugt mindestens einen erfindungsgemäßen Farbansatz in einer Menge auf das zu beschichtende Leder, dass pro m² Lederoberfläche etwa 5 bis 100 g Feststoff aufgebracht werden, bevorzugt 10 bis 50 g/m². Das Aufbringen kann durch an sich bekannte Methoden erfolgen, beispielsweise Rollcoaten (Walzenauftrag), Streichen, Spritzen, sogenanntes "airless Spritzen", Drucken, Kaschieren, Plüschen, Bürsten, Gießen oder Aufsprühen. Man kann das so behandelte Leder anschließend trocknen, beispielsweise bei einer Temperatur im Bereich von 30 bis 150°C, bevorzugt 80 bis 120°C. Das Aufbringen von mindestens einem erfindungsgemäßen Lederfinish, bevorzugt mindestens einem erfindungsgemäßen Farbansatz kann in einem oder in mehreren Schritten erfolgen, die gleich oder verschieden durchgeführt werden können und jeweils durch eine Zwischentrocknung bei den oben genannten Temperaturen unterbrochen sein können.

Ein weiterer Gegenstand der vorliegenden Erfindung sind flexible Substrate, insbesondere Leder und Lederimitate, erhältlich unter Verwendung von erfindungsgemäßen Copolymerisaten. Ein weiterer Gegenstand der vorliegenden Erfindung sind flexible Substrate, insbesondere Leder und Lederimitate, erhältlich nach dem erfindungsgemäßen Beschichtungsverfahren.

Erfindungsgemäße flexible Substrate weisen vorzügliche anwendungstechnische Eigenschaften auf, beispielsweise sind sie weich, schichten und belasten einander nicht und sind klebfrei stapelbar. Erfindungsgemäße Leder und Lederimitate lassen sich darüber hinaus besonders gut prägen, beispielsweise mit statischen hydraulischen Pressen und sogenannten "scharfen" Prägeplatten, z.B. vom Typ Madras, beispielsweise bei Temperaturen im Bereich von 80 bis 120°C und insbesondere bei Temperaturen im Bereich von 100°C bis 110°C, wobei sich die Temperatur jeweils auf die Prägeplatte bezieht, und Haltezeiten im Bereich von 1 bis 5, bevorzugt bis 4 s. In Durchlaufprägemaschinen kann man erfindungsgemäße Lederimitate und erfindungsgemäße Leder bei Temperaturen im Bereich von 100 bis 140°C, bevorzugt 110 bis 125°C und Drucke 200-250 bar prägen.

Ein weiterer Gegenstand der vorliegenden Erfindung ist ein Verfahren zur Herstellung von Möbeln oder Automobilteilen unter Verwendung von erfindungsgemäßen beschichteten flexiblen Substraten, insbesondere unter Verwendung von erfindungsgemäßem Leder oder erfindungsgemäßen Lederimitaten. Ein weiterer Gegenstand der vorliegenden Erfindung sind Möbel, beispielsweise Sessel und Sofas, und Automobilteile, beispielsweise Sitze, Lenkräder, Türen, Mittelkonsolen und Armaturenbretter, hergestellt jeweils unter Verwendung von erfindungsgemäßen flexiblen Substraten und insbesondere unter Verwendung von erfindungsgemäßem Leder bzw. erfindungsgemäßen Lederimitaten.

Die Erfindung wird durch Arbeitsbeispiele erläutert.

### Allgemeine Bemerkungen:

Glastemperaturen T_{g} wurden mit einem DSC-Gerät der Firma Mettler nach folgender Methode in Anlehnung an DIN 53765 bestimmt:

Einwaage: 10 bis 20 mg Copolymerisat-Dispersion in 40µl-Standard-Aluminiumtiegel Bei der Standardmethode für Dispersionen wird in der zweiten Aufheizkurve die Glastemperatur T_{g} (Midpoint) mit Hilfe eines Auswertemakros automatisch ermittelt. Hierbei wird eine zuvor mit einem leeren Tiegel gemessene Blindkurve subtrahiert.

Der Temperaturverlauf entspricht der gültigen DIN-Norm DIN 53765.

Der Beginn des Messablaufes ist bei 25°C. Man heizt mit 20°C/min auf 150°C (also über T_{g} hinaus) auf - die Temperatur 150°C wird 3 Minuten isotherm gehalten und dann wird mit 20°C/min auf -110°C abgekühlt. Nach einem weiteren 7-minütigen, isothermen Halten der Temperatur bei -110°C wird mit 20°C/min auf 150°C aufgeheizt (dieser Abschnitt wird ausgewertet ) und die Temperatur bei 150°C 5 Minuten gehalten.

### I. Herstellung von erfindungsgemäßen Copolymerisaten

### I.1. Herstellung von erfindungsgemäßem Copolymerisat P1

Es wurden die folgenden Mischungen angesetzt:
Mischung 1.1
   590 g n-Butylacrylat, 100 g Styrol, 1100 g Ethylacrylat, 40 g frisch destillierte Acrylsäure, 50 g Itaconsäure, 36 g einer 50 Gew.-% wässrigen Lösung von Acrylamid,
   25,2 g Natriumlaurylsulfat, gelöst in 64,8 g Wasser,
   zusammen dispergiert in weiteren 900 ml Wasser.
Mischung 1.2:
   8,4 g Natriumlaurylsulfat, gelöst in 21,2 g Wasser
   0,5 g Na₂S₂O₈ (Natriumperoxodisulfat),
   zusammen gelöst in weiteren 1300 ml Wasser
Mischung 1.3:
   5 g Na₂S₂O₈ (Natriumperoxodisulfat), gelöst in 195 ml Wasser.
Mischung 1.4:
   2,1 g tert.-Butylhxdroperoxid, gelöst in 25,9 ml Wasser.
Mischung 1.5
   2,1 g HO-CH₂-SO₂Na in 35 ml vollentsalztem Wasser
Mischung 1.6
   180 g einer wässrigen Lösung von [Zn(NH₃)₄](HCO₃)₂
In einem 10-I-Kessel mit Rührer und zwei Dosiervorrichtungen wurde Mischung 1.2 vorgelegt. Unter Rühren wurde auf 80°C erwärmt. Während der nun folgenden Emulsionspolymerisation hielt man die Temperatur zwischen 78 und 82°C.

Bei Erreichen einer Temperatur von 80°C wurde gleichzeitig mit der Dosierung von Mischung 1.1 und 1.3 begonnen, wobei die Zugabe von Mischung 1.1 etwa 150 Minuten dauerte und die Zugabe von Mischung 1.3 etwa 165 Minuten.

Nach Beendigung der Zugabe von Mischung 1.3 spülte man das Gefäß, in dem man Mischung 1.1 angesetzt hatte, mit 50 ml Wasser und dosierte die 50 ml Wasser zusammen mit den Resten von Mischung 1.1 ebenfalls. Danach ließ man noch 30 Minuten nachpolymerisieren, kühlte auf 70°C ab und gab anschließend Mischung 1.4 innerhalb von 10 Minuten zu. Anschließend kühlte man auf 65°C ab und gab Mischung 1.5 zu. Danach kühlte man auf 30°C ab und dosierte Mischung 1.6 innerhalb von 30 Minuten zu. Man erhielt Copolymerisat P1 als wässrige Dispersion mit einem pH-Wert von 8 und einem Feststoffgehalt von 41,6 %.

Die Lichtdurchlässigkeit einer auf 0,01 Gew.-% mit Wasser verdünnten Dispersion von P1 betrug 97%.

Die wässrige Dispersion von P1 war frei von Coagulat.

Die wässrige Lösung von [Zn(NH₃)₄](HCO₃)₂ (Mischung 1.6) war wie folgt hergestellt worden:

Man legte eine Mischung von 352 g Wasser und 208 g 25 Gew.-% wässriger Ammoniaklösung vor und gab unter Rühren 120 g Ammoniumhydrogencarbonat zu. Man rührte 30 Minuten bei Zimmertemperatur. Anschließend gab man 120 g Zinkoxid zu. Man beobachtete eine exotherme Reaktion. Man rührte weitere 120 Minuten bei Zimmertemperatur und filtrierte über ein 100 µm-Netz.

### I.2 Herstellung eines Vergleichspolymerisats V-P2

Man ging vor wie unter I.1 beschrieben, jedoch ersetzte man Mischung 1.1 durch eine Mischung von
1178 g n-Butylacrylat, 608 g Methylmethacrylat, 40 g frisch destillierte Methacrylsäure, 40 g Acrylsäure-N-Methylolamid und 72 g einer 50 Gew.-% wässrigen Lösung von Acrylamid.
Man erhielt ein Vergleichspolymerisat V-P2 als 35 Gew.-% wässrige Dispersion.

### Herstellung eines Fillers

1734 g Wasser wurden vorgelegt und unter Rühren zugegeben:
30 g Paraffin, Schmelzpunkt 60 bis 63°C
20 g Stearinsäure, Jodzahl < 5
10 g gesättigte Fettalkohole (Mischung von n-C₁₆-C₁₈-Alkanolen)
170 g Klauenöl, Schmelzpunkt -10°C
10 g Ölsäure
12 g 25 Gew.-%ige Ammoniaklösung in Wasser
350 g amorphe Kieselsäure
10 g Bentonit
120 g Kaolin
4 g einer 20 Gew.-%igen 1,2-Benzisothiazolin-3-on Lösung in Dipropylenglykol.

### Man erhielt einen Filler.

### Herstellung von Lederfinish

### III.1 Herstellung eines erfindungsgemäßen Lederfinishs

Die Herstellung von Lederfinishs erfolgte in einem Kessel: 535 g von erfindungsgemäßem Copolymerisat P1 als wässrige Dispersion mit 41,6 % Feststoffgehalt wurden vorgelegt. 100 g Wasser mit einer Temperatur von 15°C wurden zugegeben. Unter Rühren gab man 4 g wässrige Ammoniaklösung (25 Gew.-%) und danach über einen Zeitraum von 30 Minuten 300 g Filler aus Beispiel II.1 zu. Danach wurde bis zur vollständigen Homogenisierung gerührt. Unter Rühren wurden 1,5g Konservierungsmittel (Benzoisothiazolin-3-one (B.I.T. als 20 Gew.-% in Dipropylenglykol) und danach eine Mischung von 15 g einer wässrigen Dispersion (mit Feststoffgehalt: 40%) eines statistischen Copolymers aus 10 Gew.-% Acrylsäure, 56 Gew.-% Ethylacrylat und 34 Gew.-% Methacrylsäure, M_{w} 200.000 g/mol, pH-Wert 3, und 45g Wasser über einen Zeitraum von 30 Minuten dosiert. Danach wurde 30 Minuten gerührt und dann eine Probe entnommen, um Feststoffgehalt, pH-Wert und Viskosität (Ford Cup 6mm) zu analysieren.

Man erhielt die folgenden Werte:

| | |
|---|---|
| Feststoffgehalt: | 31 % |
| pH-Wert | 8,1 |
| Viskosität nach DIN 53211 bei 25°C: | 29 s |

### III.2 Herstellung von Vergleichsfinish

627 g von Vergleichspolymerisat V-P2 als wässrige Dispersion mit 35 % Feststoffgehalt wurden vorgelegt. 15 g Wasser mit einer Temperatur von 15°C wurden zugegeben. Unter Rühren gab man 3 g wässrige Ammoniaklösung (25 Gew.-%) zu. Unter Rühren gab man danach über einen Zeitraum von 30 Minuten 300 g Filler aus Beispiel II.1 zu. Danach wurde bis zur vollständigen Homogenisierung gerührt. Unter Rühren wurden 2 g Benzoisothiazolin-3-one (B.I.T.) als 20 Gew.-% in Dipropylenglykol) und danach eine Mischung von 14 g (mit Feststoffgehalt: 40%) eines statistischen Copolymers aus 10 Gew.-% Acrylsäure, 56 Gew.-% Ethylacrylat und 34 Gew.-% Methacrylsäure, M_{w} 200.000 g/mol, pH-Wert 3, und 39 g Wasser über einen Zeitraum von 30 Minuten dosiert. Danach wurde 30 Minuten gerührt und dann eine Probe entnommen,
um Feststoffgehalt, pH-Wert und Viskosität (Ford Cup 6mm) zu analysieren.

Man erhielt die folgenden Werte:

| | |
|---|---|
| Feststoffgehalt: | 31 % |
| pH-Wert | 8,1 |
| Viskosität nach DIN 53211 bei 25°C: | 37 s |

### IV. Applikation eines erfindungsgemäßen Lederfinishs und eines Vergleichsfinishs Man verrührte

800 g erfindungsgemäßes Lederfinish aus Beispiel III.1 und 200 g Pigmentpräparation nach DE 41 42 240 A2, Beispiel 3. man erhielt einen erfindungsgemäßen Farbansatz.

Die Viskosität des Farbansatzes betrug anwendungsgerechte 35 - 50 s DIN, bestimmt nach DIN 53211 bei 25°C.

Analog verrührte man 800 g Vergleichsfinish aus Beispiel III.2 mit 200 g Pigmentpräparation nach DE 41 42 240 A2, Beispiel 3. Man erhielt einen Vergleichsfarbansatz.

Als Untergrund wurde geschliffenes und vorgemilltes Möbelleder verwendet.

Die Applikation des Farbansatzes (erfindungsgemäß oder Vergleichsfarbansatz) auf Leder wurde mittel Hilfe einer Druckluftpistole durchgeführt. Man trug insgesamt 14 g/ft² bis 16g/ft² Farbansatz in zwei gleich starken Aufträgen auf. Nach jedem einzelnen Auftrag wurde das Leder getrocknet. Nach dem Auftragen lagerte man das erfindungsgemäß zugerichtete Leder, bis es eine Feuchtigkeit von etwa 8 Gew.-% auf der Narbenseite aufwies.

**Tabelle 1: Anwendungsbeispiele A.1 bis A.3 (erfindungsgemäß) und V.1 bis V.3 (Vergleichsbeispiele)**

| Anwendungs-Beispiel: | A.1 | A.2 | A.3 | V.1 | V.2 | V.3 |
|---|---|---|---|---|---|---|
| Erfindungsgemäßer Farbansatz | X | X | X | | | |
| Vergleichsfarbansatz | | | | X | X | X |
| pH-Wert | 8,5 | 8,5 | 8,5 | 8,3 | 8,3 | 8,3 |
| Viskosität DIN 53211 / 25°C [s] | 42 | 43 | 44 | 37 | 37 | 37 |
| | | | | | | |
| 1. Auftrag, nass in g/ft² | 7,6 | 8,7 | 13 | 10,2 | 9,2 | 13,5 |
| 2. Auftrag, nass in g/ft² | 5,9 | 6,9 | | 5 | 5,1 | |
| Summe, nass in g/ft² | 13,5 | 15,6 | 13 | 15,2 | 14,3 | 13,5 |
| | | | | | | |
| Prägung bei | | | | | | |
| 100°C, 120 bar, 2 s | X | | | | X | |
| 100°C, 150 bar, 3 s | | X | X | X | | X |
| | | | | | | |
| Bally-Flexometer, trocken,nach 50 000 Knickungen | 2 | 1 | 0 | 6 | 6 | 6 |
| Beurteilung der Prägung: | 1 | 1 | 0 | 4 | 4 | 4 |

Die Beurteilung nach Bally erfolgte jeweils an nicht-geprägten Prüfkörpern nach folgenden Kriterien: 0: keine Beschädigung, 1: geringfügige Beschädigung, 2: wenig beschädigt, noch akzeptabel, 6: vollständig gebrochen.

### V. Prägen eines erfindungsgemäßen Leders

Zum Prägen wurde erfindungsgemäß zugerichtetes Leder aus IV in Stücke zu je 1ft² geschnitten und danach in einer hydraulischen Prägemaschine geprägt.

Es wurden jeweils zwei Stücke in die hydraulische Prägemaschine gebracht und gleichzeitig geprägt. Folgende Einstellungen der Prägemaschine wurden getestet:
1. 70°C, 70 bar, 1,5 Sekunden
2. 85°C, 80 bar, 3 Sekunden
3. 100°C, 120 bar, 2 Sekunden
4. 100°C, 150 bar, 3 Sekunden
5. 100°C, 170 bar, 4 Sekunden

Man erhielt erfindungsgemäße geprägte Leder 5.1 bis 5.5.

Die Prägung wurde gemäß folgender Skala beurteilt:
0=Nichts durchgeprägt, Profil rund und mit Details;
1= fast nichts durchgeprägt, Profil rund ohne Details;
2= durchgeprägt, Profil rund;
3= durchgeprägt, Profil flach;
4= sehr durchgeprägt, Profil sehr flach und Film etwas zerschmolzen;
5= sehr durchgeprägt, Profil sehr flach und Film sehr zerschmolzen.

Die Beurteilungen sind in Tabelle 1 aufgeführt.

## Patentansprüche

1. Copolymerisate, hergestellt durch Copolymerisation von
(a) 1 bis 10 Gew.-% mindestens einer ethylenisch ungesättigten C₄-C₁₀-Dicarbonsäure,
(b) 1 bis 10 Gew.-% mindestens einer ethylenisch ungesättigten C₃-C₁₀-Monocarbonsäure,
wobei die Summe aus (a) und (b) im Bereich von 3,1 Gew.-% bis 15 Gew.-% liegt,
(c) 65 bis 95 Gew.-% mindestens einer Verbindung der allgemeinen Formel I 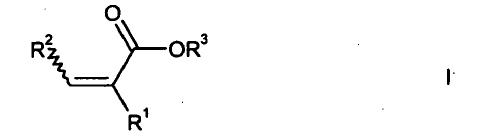
(d) 0 bis 3 Gew.-% (Meth)acrylnitril,
wobei die Variablen wie folgt definiert sind:
R¹, R² gleich oder verschieden und gewählt aus Wasserstoff und C₁-C₁₀-Alkyl,
R³ gewählt aus C₁-C₂₀-Alkyl,
wobei die Copolymerisate vollständig oder partiell mit Alkali oder Ammonium neutralisiert sein können
un wobei Angaben in Gew.-% jeweils auf das gesamte Copolymerisat bezogen sind.

2. Copolymerisate nach Anspruch 1, **dadurch gekennzeichnet, dass** man weiterhin
(e) 0 bis 3,5 Gew.-% (Meth)acrylamid
bei der Copolymerisation einsetzt.

3. Copolymerisate nach einem der Ansprüche 1 oder 2, **dadurch gekennzeichnet, dass** man weiterhin
(f) 0 bis 20 Gew.-% mindestens einer vinylaromatischen Verbindung der allgemeinen Formel II 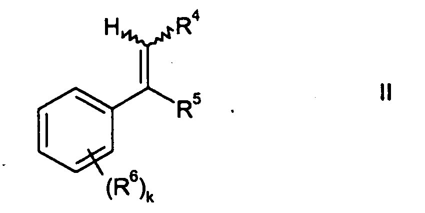
bei der Copolymerisation einsetzt, wobei die Variablen wie folgt definiert sind:
R⁴, R⁵, R⁶ gleich oder verschieden und gewählt aus Wasserstoff und C₁-C₁₀-Alkyl,
k eine ganze Zahl im Bereich von 0 bis 3.

4. Copolymerisate nach einem der Ansprüche 1 bis 3, **dadurch gekennzeichnet, dass** es sich bei mindestens einer ethylenisch ungesättigten C₄-C₁₀-Dicarbonsäure um Itaconsäure handelt.

5. Copolymerisate nach einem der Ansprüche 1 bis 4 , **dadurch gekennzeichnet, dass** R¹ und R² jeweils Wasserstoff oder Methyl bedeuten.

6. Copolymerisate nach einem der Ansprüche 1 bis 5, **dadurch gekennzeichnet, dass** die Summe aus (a) und (b) im Bereich von 3,5 bis 10 Gew.-% liegt.

7. Copolymerisate nach einem der Ansprüche 1 bis 6, **dadurch gekennzeichnet, dass** man sie nach einem Einstufenverfahren herstellt.

8. Wässrige Dispersionen, enthaltend mindestens ein Copolymerisat nach einem der Ansprüche 1 bis 7.

9. Wässrige Dispersionen nach Anspruch 8, **dadurch gekennzeichnet, dass** sie einen pH-Wert im Bereich von 2 bis 8,5 aufweisen.

10. Wässrige Dispersionen nach Anspruch 8 oder 9 , **dadurch gekennzeichnet, dass** sie ein Vernetzungsmittel enthalten.

11. Wässrige Dispersionen nach Anspruch 10, **dadurch gekennzeichnet, dass** es sich bei dem Vernetzungsmittel um eine Zn- oder Ca-Verbindung handelt.

12. Verwendung von wässrigen Dispersionen nach einem der Ansprüche 8 bis 11 zur Beschichtung von flexiblen Substraten.

13. Verfahren zur Beschichtung von flexiblen Substraten unter Verwendung von mindestens einer wässrigen Dispersion nach einem der Ansprüche 8 bis 11.

14. Verfahren nach Anspruch 13, **dadurch gekennzeichnet, dass** es sich bei flexiblen Substraten um Leder oder Lederimitate handelt.

15. Beschichtete flexible Substrate, erhältlich nach einem Verfahren nach Anspruch 13 oder 14.

16. Lederfinish, enthaltend mindestens eine wässrige Dispersion nach einem der Ansprüche 8 bis 11 und einen Filler.

17. Lederfinish nach Anspruch 16, **dadurch gekennzeichnet, dass** der Filler Proteinfrei ist.

18. Farbansatz, enthaltend mindestens ein Lederfinish nach Anspruch 16 oder 17 und mindestens ein Pigment.

19. Verfahren zur Herstellung von Möbeln oder Automobilteilen unter Verwendung von beschichteten flexiblen Substraten nach Anspruch 15.

20. Verfahren zur Herstellung von Copolymerisaten, **dadurch gekennzeichnet, dass** man
(a) 1 bis 10 Gew.-% mindestens einer ethylenisch ungesättigten C₄-C₁₀-Dicarbonsäure,
(b) 1 bis 10 Gew.-% mindestens einer ethylenisch ungesättigten C₃-C₁₀-Monocarbonsäure,
wobei die Summe aus (a) und (b) im Bereich von 3,1 Gew.-% bis 15 Gew.-% liegt,
(c) 65 bis 95 Gew.-% mindestens einer Verbindung der allgemeinen Formel I 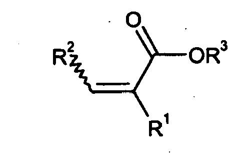
(d) 0 bis 3 Gew.-% (Meth)acrylnitril,
wobei die Variablen wie folgt definiert sind:
R¹, R² gleich oder verschieden und gewählt aus Wasserstoff und C₁-C₁₀-Alkyl,
R³ gewählt aus C₁-C₂₀-Alkyl,
wobei Angaben in Gew.-% jeweils auf die Gesamtmasse der Comonomeren bezogen sind,
durch Emulsionspolymerisation miteinander polymerisiert
und gegebenenfalls mit basischer Alkalimetallverbindung, Ammoniak oder Amin vollständig oder partiell neutralisiert.

## Claims

1. A copolymer prepared by copolymerization of
(a) from 1 to 10% by weight of at least one ethylenically unsaturated C₄-C₁₀-dicarboxylic acid,
(b) from 1 to 10% by weight of at least one ethylenically unsaturated C₃-C₁₀-monocarboxylic acid,
the sum of (a) and (b) being in the range from 3.1 % by weight to 15% by weight,
(c) from 65 to 95% by weight of at least one compound of the general formula I 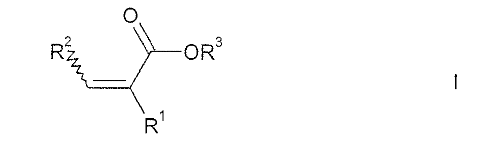
(d) from 0 to 3% by weight of (meth)acrylonitrile,
in which the variables are defined as follows:
R¹ and R² are identical or different and are selected from hydrogen and C₁-C₁₀-alkyl,
R³ is selected from C₁-C₂₀-alkyl,
it being possible for the copolymers to be completely or partly neutralized with alkali or ammonium
and data in % by weight being based in each case on the total copolymer.

2. The copolymer according to claim 1, wherein furthermore
(e) from 0 to 3.5% by weight of (meth)acrylamide is used in the copolymerization.

3. The copolymer according to either of claims 1 and 2, wherein furthermore
(f) from 0 to 20% by weight of at least one vinylaromatic compound of the general formula II 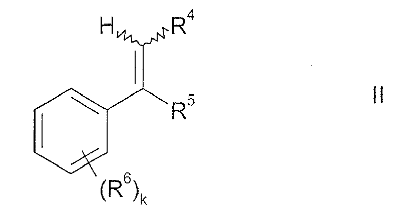
in which the variables are defined as follows:
R⁴, R⁵ and R⁶ are identical or different and are selected from hydrogen and C₁-C₁₀-alkyl,
k is an integer in the range from 0 to 3
is used in the copolymerization.

4. The copolymer according to any of claims 1 to 3, wherein at least one ethylenically unsaturated C₄-C₁₀-dicarboxylic acid is itaconic acid.

5. The copolymer according to any of claims 1 to 4, wherein R¹ and R² are each hydrogen or methyl.

6. The copolymer according to any of claims 1 to 5, wherein the sum of (a) and (b) is in the range from 3.5 to 10% by weight.

7. The copolymer according to any of claims 1 to 6, which is prepared by a one-stage process.

8. An aqueous dispersion comprising at least one copolymer according to any of claims 1 to 7.

9. The aqueous dispersion according to claim 8, which has a pH in the range from 2 to 8.5.

10. The aqueous dispersion according to claim 8 or 9, which comprises a crosslinking agent.

11. The aqueous dispersion according to claim 10, wherein the crosslinking agent is a zinc or calcium compound.

12. The use of an aqueous dispersion according to any of claims 8 to 11 for the coating of flexible substrates.

13. A process for the coating of flexible substrates using at least one aqueous dispersion according to any of claims 8 to 11.

14. The process according to claim 13, wherein flexible substrates are leathers or imitation leathers.

15. A coated flexible substrate obtainable by a process according to claim 13 or 14.

16. A leather finish comprising at least one aqueous dispersion according to any of claims 8 to 11 and a filler.

17. The leather finish according to claim 18, wherein the filler is protein-free.

18. A dye batch comprising at least one leather finish according to claim 16 or 17 and at least one pigment.

19. A process for the production of pieces of furniture or automotive parts using coated flexible substrates according to claim 15.

20. A process for the preparation of copolymers, wherein
(a) from 1 to 10% by weight of at least one ethylenically unsaturated C₄-C₁₀-dicarboxylic acid,
(b) from 1 to 10% by weight of at least one ethylenically unsaturated C₃-C₁₀-monocarboxylic acid,
the sum of (a) and (b) being in the range from 3.1 % by weight to 15% by weight,
(c) from 65 to 95% by weight of at least one compound of the general formula I 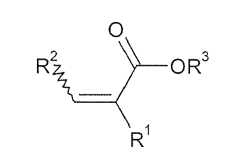
(d) from 0 to 3% by weight of (meth)acrylonitrile,
in which the variables are defined as follows:
R¹ and R² are identical or different and are selected from hydrogen and C₁-C₁₀-alkyl,
R³ is selected from C₁-C₂₀-alkyl,
data in % by weight being based in each case on the total mass of the comonomers,
are polymerized with one another by emulsion polymerization
and, if appropriate, completely or partly neutralized with a basic alkali metal compound, ammonia or an amine.

## Revendications

1. Copolymères, fabriqués par copolymérisation de
(a) 1 à 10 % en poids d'au moins un acide dicarboxylique en C₄ à C₁₀ éthyléniquement insaturé,
(b) 1 à 10 % en poids d'au moins un acide monocarboxylique en C₃ à C₁₀ éthyléniquement insaturé,
la somme de (a) et (b) se trouvant dans la plage allant de 3,1 % en poids à 15 % en poids,
(c) 65 à 95 % en poids d'au moins un composé de formule générale I 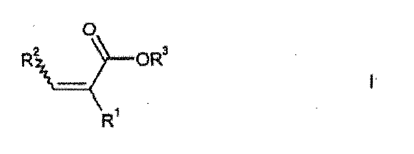
(d) 0 à 3 % en poids de (méth)acrylonitrile,
les variables étant définies de la manière suivante :
R¹, R² identiques ou différents et choisis parmi l'hydrogène et les alkyles en C₁-C₁₀,
R³ choisi parmi les alkyles en C₁-C₂₀,
les copolymères pouvant être neutralisés en totalité ou en partie avec des alcalis ou de l'ammonium
et les données en % en poids étant à chaque fois par rapport au copolymère total.

2. Copolymères selon la revendication 1, **caractérisés en ce que**
(e) 0 à 3,5 % en poids de (méth)acrylamide
sont également utilisés lors de la copolymérisation.

3. Copolymères selon l'une quelconque des revendications 1 ou 2, **caractérisés en ce que**
(f) 0 à 20 % en poids d'au moins un composé vinylaromatique de formule générale II 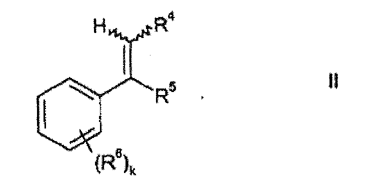
sont également utilisés lors de la copolymérisation, les variables étant définies de la manière suivante :
R⁴, R⁵, R⁶ identiques ou différents et choisis parmi l'hydrogène et les alkyles en C₁-C₁₀,
k un nombre entier dans la plage allant de 0 à 3.

4. Copolymères selon l'une quelconque des revendications 1 à 3, **caractérisés en ce que** le ou les acides dicarboxyliques en C₄ à C₁₀ éthyléniquement insaturés sont l'acide itaconique.

5. Copolymères selon l'une quelconque des revendications 1 à 4, **caractérisés en ce que** R¹ et R² signifient à chaque fois hydrogène ou méthyle.

6. Copolymères selon l'une quelconque des revendications 1 à 5, **caractérisés en ce que** la somme de (a) et (b) se trouve dans la plage allant de 3,5 à 10 % en poids.

7. Copolymères selon l'une quelconque des revendications 1 à 6, **caractérisés en ce qu'**ils sont fabriqués selon un procédé à une étape.

8. Dispersions aqueuses, contenant au moins un copolymère selon l'une quelconque des revendications 1 à 7.

9. Dispersions aqueuses selon la revendication 8, **caractérisées en ce qu'**elles présentent une valeur de pH dans la plage allant de 2 à 8,5.

10. Dispersions aqueuses selon la revendication 8 ou 9, **caractérisées en ce qu'**elles contiennent un agent de réticulation.

11. Dispersions aqueuses selon la revendication 10, **caractérisées en ce que** l'agent de réticulation est un composé de Zn ou de Ca.

12. Utilisation de dispersions aqueuses selon l'une quelconque des revendications 8 à 11 pour le revêtement de substrats flexibles.

13. Procédé de revêtement de substrats flexibles, utilisant au moins une dispersion aqueuse selon l'une quelconques des revendications 8 à 11.

14. Procédé selon la revendication 13, **caractérisé en ce que** les substrats flexibles sont du cuir ou des imitations de cuir.

15. Substrats flexibles enduits, pouvant être obtenus par un procédé selon la revendication 13 ou 14.

16. Fini cuir, contenant au moins une dispersion aqueuse selon l'une quelconque des revendications 8 à 11 et une charge.

17. Fini cuir selon la revendication 16, **caractérisé en ce que** la charge est exempte de protéines.

18. Préparation de colorant, contenant au moins un fini cuir selon la revendication 16 ou 17 et au moins un pigment.

19. Procédé de fabrication de meubles ou de parties d'automobiles, utilisant des substrats flexibles enduits selon la revendication 15.

20. Procédé de fabrication de copolymères, **caractérisé en ce que**
(a) 1 à 10 % en poids d'au moins un acide dicarboxylique en C₄ à C₁₀ éthyléniquement insaturé,
(b) 1 à 10 % en poids d'au moins un acide monocarboxylique en C₃ à C₁₀ éthyléniquement insaturé,
la somme de (a) et (b) se trouvant dans la plage allant de 3,1 % en poids à 15 % en poids,
(c) 65 à 95 % en poids d'au moins un composé de formule générale I 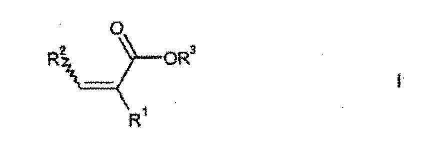
(d) 0 à 3 % en poids de (méth)acrylonitrile,
les variables étant définies de la manière suivante :
R¹, R² identiques ou différents et choisis parmi l'hydrogène et les alkyles en C₁-C₁₀,
R³ choisi parmi les alkyles en C₁-C₂₀,
les données en % en poids étant à chaque fois par rapport à la masse totale des comonomères,
sont polymérisés les uns avec les autres par polymérisation en émulsion
et éventuellement neutralisés en totalité ou en partie avec un composé basique de métal alcalin, de l'ammoniac ou une amine.
